# EUROPEAN PATENT APPLICATION

(11) **EP 1 215 906 A2**
(43) Date of publication of application: **19.06.2002**
(21) Application number: 01811124.5
(22) Date of filing: 22.11.2001
(51) Int. Cl.: H04N 7/173, H04N 7/22, H04B 10/20, H01R 9/24

(54) **Wall-mounted optical socket for reception and transmission**

(30) Priority: 07.12.2000 CH 238000
(71) Applicant: EMC Electronic Media Communication S.A., 6501 Bellinzona (CH)
(72) Inventor: Marcionetti, Raffaello, 6714 Semione (CH); Franscini, Giovanni, 6710 Biasco (CH); Tonini, Andrea, 6501 Bellinzona (CH)
(74) Representative: Fiammenghi-Domenighetti, Delfina

(57) **Abstract**

A wall-mounted optical socket fitted in a subscriber's home permits connection to a CATV network of the FTTH (Fibre To The Home) type. A broadband analogue transceiver carries out the optical-electrical conversion of the signals from the network and converts the RF signal of the DOCSIS type from the cable modem to an optical signal. An optical adapter mounted on the socket permits an optical fibre connection from the home to the network.

## Description

The present invention relates to a socket for a connection between an optical fibre telecommunications network and the equipment located in a user's home for receiving and transmitting signals. More particularly, the present invention relates to a device for receiving a television signal from an optical fibre CATV network and transferring it to the television set via a coaxial cable, and for transferring signals of the electrical or optical type, sent from equipment in a subscriber's home, to the optical fibre network. The present invention is particularly suited to CATV distribution systems in which AM (amplitude modulated) signals and those of the DOCSIS type are generated or transmitted.

At the present time, the configuration of a television signal network comprises an optical fibre portion and a coaxial cable portion leading to the customer. The liberalization in the field of telecommunications in recent years has enabled the owners of these networks to offer new services in addition to the conventional provision of radio and television programmes. This has been made possible by the transmission of data by means of suitable modems with radio-frequency modulated signals according to the DOCSIS standard. In practice, the division of the bandwidth of a coaxial cable into two parts creates an outgoing path, in which the radio and television channels are present, together with the data transmission channels, and a return path, with narrower bandwidth, for data transmission. This has enabled the existing coaxial cables in the final portion to be retained in the short term. At the present time, practically all television signal networks use a system of data transmission via coaxial cables. The use of this data transmission system has revealed criticalities and problems of a technical nature in the distribution network. The criticalities are encountered, primarily, in the accumulated noise in the return path, in the disturbances entering via insufficiently screened existing coaxial cable, and in the limitation of the bandwidth. These problems increase with an increase in the number of users connected by modems. It has therefore become necessary to redesign the network topology in such a way as to separate the various connected users into small groups, and to redesign the existing coaxial cable system. A solution to the aforesaid problems is to provide an optical fibre cable link to the subscriber's home. This solution, although it has only reached a preliminary stage as yet, has the advantage of already providing a high data transmission capacity without any particular problems and in a fairly simple way. The inventors of the present invention have therefore tackled the problem of creating an interface between a television transmission network, which is linked to the home by optical fibre cables, and ordinary television sets and DOCSIS cable modems for data transmission and reception present in a subscriber's home, this equipment normally being provided with inputs and outputs of the coaxial electrical type. The invention also proposes a purely optical connection to the subscriber's home which provides a very-high-bandwidth window for this equipment in the network. This type of connection offers, for the first time, direct network access for the latest generation of optical fibre peripheral devices which can support protocols such as IEEE 1394 and Giga Ethernet, thus preparing the home for future developments in "Home Intranetworking".

In the present description and in the claims, the expression "outgoing path signal" is used to denote the AM broadband CATV signal which travels from the optical fibre network towards the socket; the expression "return path signal" is used to denote all types of signal which are sent from the socket to the optical fibre CATV network to which the socket is connected.

The invention consists of a compact wall-mounted multimedia socket, having the same dimensions as a standard CATV network socket. The said socket comprises a plastic frame for the connectors, and an aluminium box containing an optoelectronic conversion circuit. The said optoelectronic conversion circuit comprises
a) a first optical fibre input into which the AM broadband optical CATV signal from the optical fibre CATV network is transmitted;
b) an analogue optical receiver connected to the said first optical fibre input, for converting the optical television signal to an electrical signal; the said analogue optical receiver consists of a photodiode and a broadband electronic preamplifier;
c) a set of diverters for sampling the output signal from the said broadband electronic preamplifier;
d) a set of electrical outputs with coaxial connectors for connecting the television and radio sets;
e) a set of electrical inputs with coaxial connectors for connecting the cable modes. The said set of electrical inputs and the said set of electrical outputs are connected to the said set of diverters;
f) an output connected to the said broadband electronic preamplifier for linking to a subsequent socket, if necessary;
g) an electronic device for decoupling the outgoing path signal from the return path signal;
h) an optical transmitter for converting to optical form the electrical return path signal from the cable modems; preferably, the said optical transmitter is a laser and is electrically isolated from the outgoing path signal in the socket by means of the said electronic device for decoupling the outgoing path signal from the return path signal;
i) an optical fibre output connected to the said optical transmitter;
j) one or more optical fibre optical inputs for return path signals;
k) one or more optical fibre optical outputs for outgoing path signals;
   · The said one or more optical fibre optical inputs and the said one or more optical fibre optical outputs are connected directly or via optical couplers to the optical fibre of the optical fibre CATV network leading to the subscriber's home;
   · in a first embodiment, the said one first optical fibre input and the said one optical fibre output are connected directly to the optical fibre of the said optical fibre CATV network leading to the subscriber's home;
   · in a second embodiment, the said one first optical fibre input and the said one optical fibre output are connected by means of optical couplers to the optical fibre of the said optical fibre CATV network leading to the subscriber's home.

Advantageously, the optical outputs and inputs of the said optoelectronic conversion circuit are connected to a reel on which are wound the optical fibres or the ribbons of optical fibres to be installed in the subscriber's home with the socket. The socket has a system for fixing to the reel of optical fibre to be installed, to facilitate the installation.

A first advantage of the optical interface according to the invention is that it enables the transmission capacity of optical fibre cabling to the subscriber's home to be exploited to the full by means of a compact socket having the same dimensions as a cable television socket. A second advantage of the said socket is that it can allow the subscriber to enjoy a high-quality television picture such as that transmitted optically via optical fibres. Another advantage is the system of fixing to the reel, which facilitates and accelerates the installation of optical fibre cables in the home. Finally, the optical input and output present in the socket provide services in a band which for practical purposes is limited only by the final optical-electrical conversion, thus providing a product with great potential, limited only by the speed and performance limitations of the devices connected to the network. The whole is achieved in a simple and compact way, with the number of optical and electronic components being kept to an absolute minimum.

Characteristics and advantages of the invention will now be illustrated with reference to embodiments represented by way of example, without restrictive intent, in the attached drawings, in which
Fig. 1 is a schematic representation of the all-optical-fibre CATV network in which the invention is installed;
Fig. 2 is a representation of the external appearance of an embodiment of the invention, in a front view (Fig. 2A) and a side view (Fig. 2B);
Fig. 3 is a schematic representation of a first embodiment of the optoelectronic device according to the invention;
Fig. 4 is a schematic representation of a second embodiment of the optoelectronic device according to the invention;
Fig. 5 is a schematic representation of a third embodiment of the optoelectronic device according to the invention; and
Fig. 6 is a schematic representation of a fourth embodiment of the optoelectronic device according to the invention.

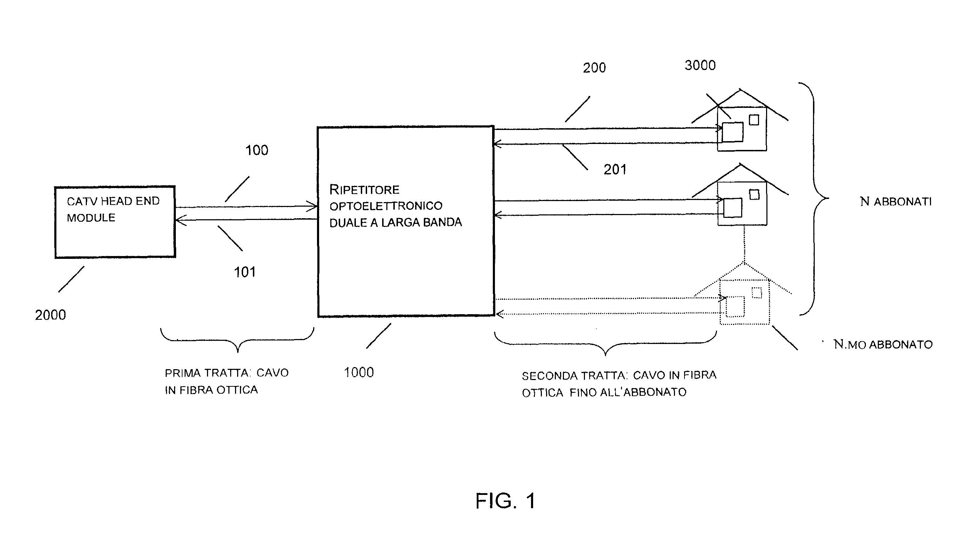

With reference to Fig. 1, an optical fibre CATV network with a fibre link to the subscriber is shown schematically. This diagram is intended to show the point where the invention in question is installed. With reference to Fig. 1, the AM broadband television signal is transmitted by a station 2000, conventionally called the "head end". The television signal is transmitted along the optical fibre 100 which carries it to the module called the "dual broadband optoelectronic repeater" 1000, which regenerates it and sends it, via N fibres 200, to the N individual subscribers. The invention 3000 is installed in the home of each of the said subscribers. The return path 201 departs from the invention and carries the data from the individual subscribers' homes to the said dual broadband optoelectronic repeater 1000. This repeater then sends the sum of the signals towards the head end 2000 via the optical fibre 101.

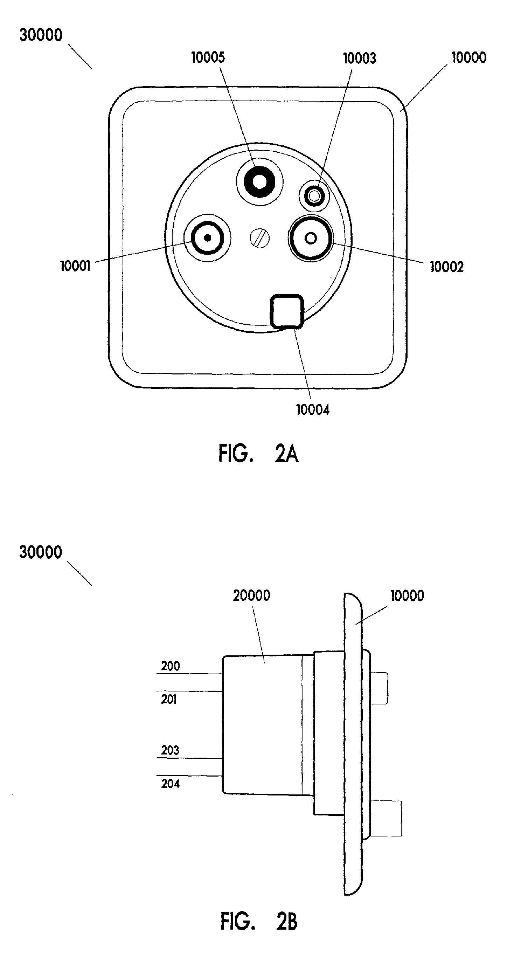

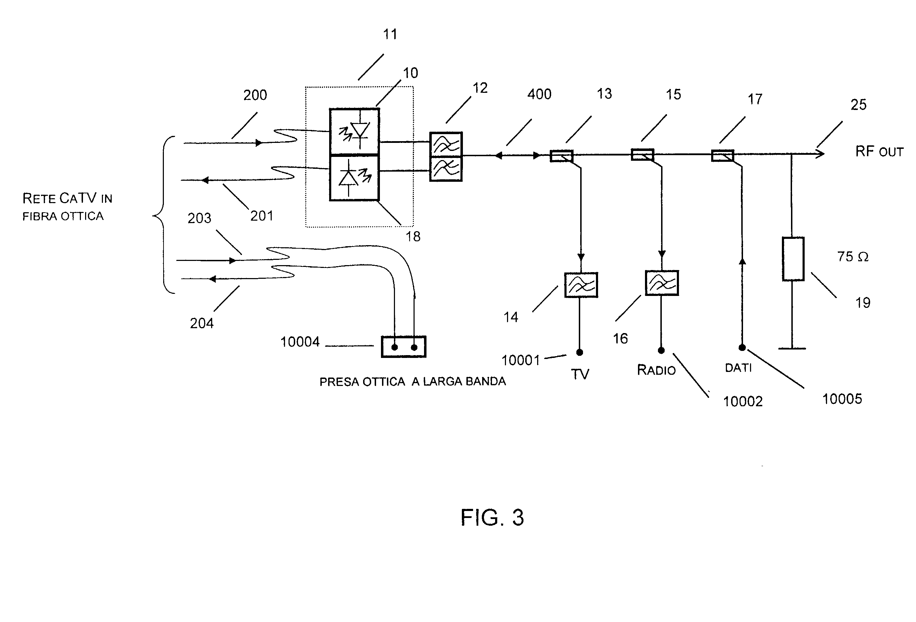

Fig. 2 shows a drawing of the external appearance of an embodiment of the invention, in a front view (Fig. 2A) and a side view (Fig. 2B). This consists of a wall socket having the geometrical dimensions of an ordinary CATV network socket. The embodiment in question consists of a plastic support 10000 which surrounds a coaxial video connector 10001, a coaxial radio connector 10002, a power supply connector 10003, a coaxial cable modem connector 10005, and an MT-RJ optical adapter 10004. The side view in Fig. 2B shows the rear aluminium container 20000, in which is fitted the optoelectronic circuit for optical/electrical signal conversion which is shown in Figures 3, 4, 5 and 6 in four embodiments. Fig. 2 shows, on the rear face of the embodiment of the invention, the optical fibre 200 along which the outgoing path signal is transmitted, the fibre 201 along which the return path signal is transmitted, and the fibres 203 and 204, representing two supplementary optical fibre channels for very-high-bandwidth connections using the MT-RJ optical adapter 10004. Fig. 3 shows a first embodiment of the said optoelectronic circuit for converting optical signals to electrical signals. The AM broadband optical video signal arriving from the outgoing path along the optical fibre 200 is converted to an electrical signal by the broadband analogue receiver 10, which forms part of the broadband analogue transceiver 11. The said analogue receiver 10 converts the signal from optical to electrical and amplifies it by 20 dB. The signal converted to electrical form in this way is sent to the said electronic device for decoupling the outgoing path from the return path, this device being the diplexer 12 in the present embodiment. The diplexer 12 consists of a high-pass filter and a low-pass filter. The signal from the outgoing path is taken from the output of the high-pass filter by a first electronic 1/10 diverter 13 which sends it to the coaxial connector of the TV socket 10001, via the filter 14 which has the function of decoupling the return path from low-frequency disturbances originating from the television set. A second diverter 15 sends the outgoing path signal to the radio coaxial connector 10002 with the high-pass filter 16 whose function is similar to that of the filter 14. The 1/10 diverter 17 is designed to inject into the electrical line 400 the data signal of the return path, taken from the coaxial connector 10005 which is usually connected to a cable modem. The electrical signal which carries the data stream from the coaxial connector 10005 is sent by the diplexer 12 to a laser transmitter 18 of the VCSEL type with an output power of 0 dBm. This VCSEL is provided with an output power control circuit and converts the electrical signal carrying the return path data to an optical signal. Finally, an RF output 25 terminated with a 75 ohm resistor 19 allows the socket to be connected with any additional sockets. The present invention also comprises an MT-RJ optical connector 10004 which is connected to the optical fibre CATV network by two further optical fibres 203, 204. In the present embodiment, the set of fibres 200, 201, 203, 204 is a ribbon of 4 optical fibres. The TV signal at the socket measured as received from the optical network was found to have a CTB of 58 dB, a CSO of 57 dB and a C/N ratio of 46 dB, for a signal of 42 CENELEC optical carriers sent from the head end, in the band from 47 MHz to 860 MHz, using a CATV analogue transmitter made by the EMC company, with an output power of 13 dBm. The C/N ratio measured at the return path receiver located in the dual broadband optoelectronic repeater of Fig. 1, which receives the return path optical signal produced by the VCSEL, was found to be 45 dB.

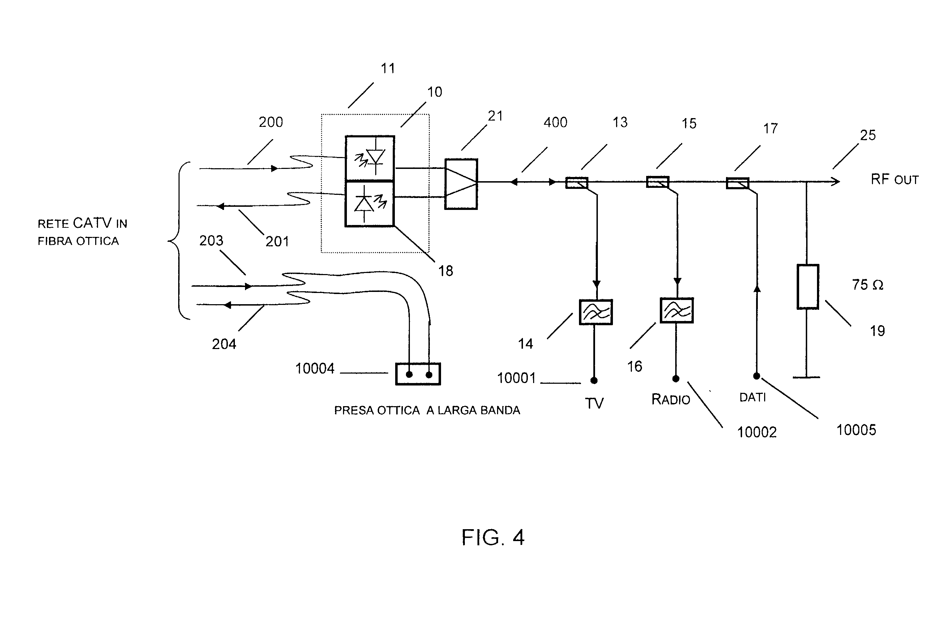

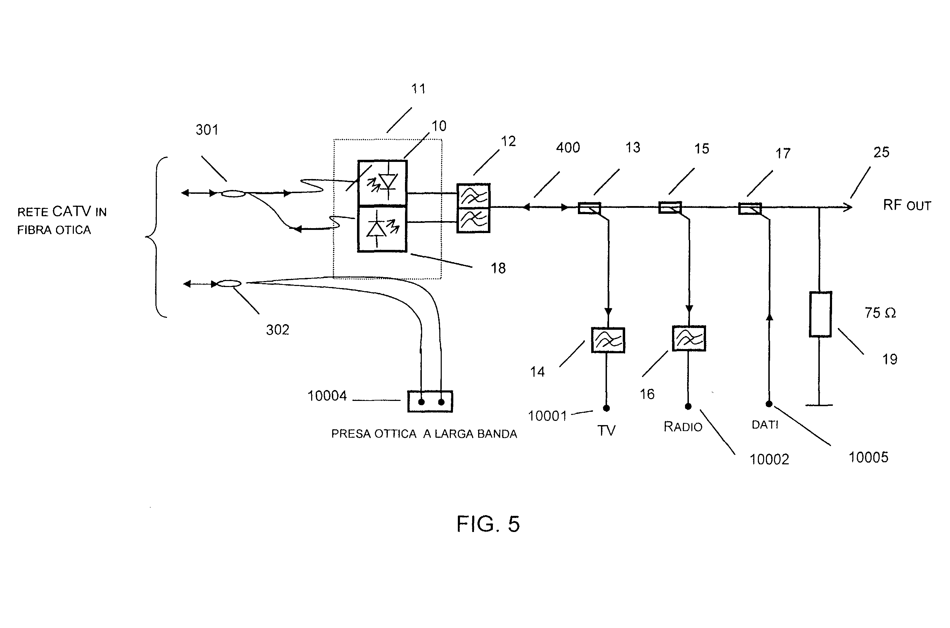

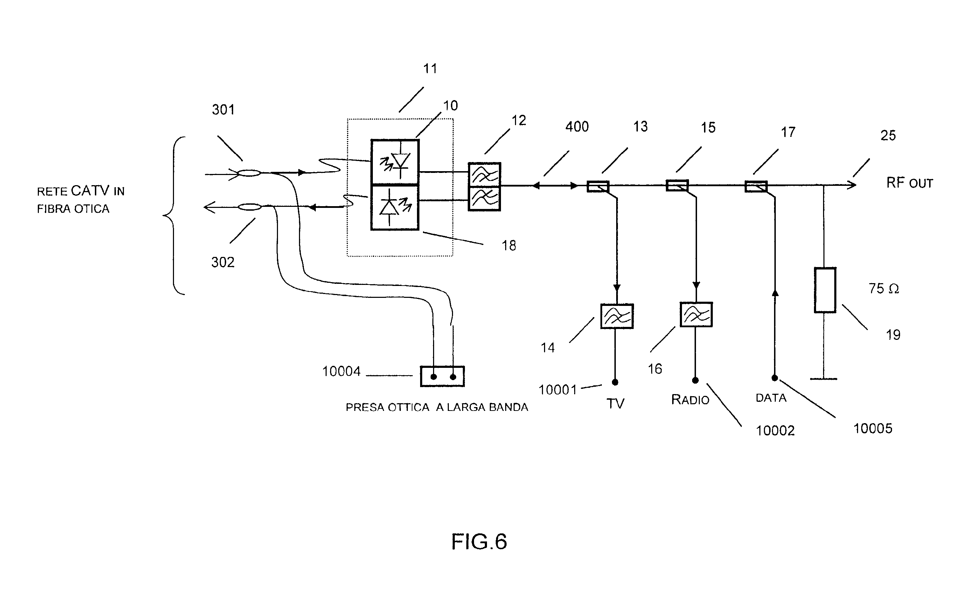

Fig. 4 shows a variant of the embodiment described in Fig. 3, in which the diplexer 12 is replaced by a high-isolation splitter 21 for decoupling the outgoing path signals from the return path laser transmitter 18. This configuration enables a greater bandwidth to be used for the data signal of the return path, but has a lower capacity for isolating the outgoing path from the return path than the configuration with the diplexer 12. Fig. 5 shows a further variant of Fig. 3, in which optical couplers 301 and 302 are placed at the interface, making it possible to use a two-fibre link instead of a 4-fibre link, the same fibre being used to carry signals propagated in opposite directions. The set of two fibres 200 and 201 is a two-fibre ribbon. A further variant of the last-mentioned configuration is shown in Fig. 6.

## Claims

1. Wall-mounted optical socket for reception and transmission, comprising:
· A set of optical fibre inputs and outputs;
· A set of coaxial connectors for electrical inputs and outputs;
· An input for the power supply;
· An optical reception system, connected to an optical fibre, which converts an analogue and/or digital optical television signal to a radio-frequency electrical signal;
· An optical transmission system, comprising an optical source and connected to an optical fibre, which converts a radio-frequency signal of the return path, sent from a DOCSIS modem for example, to an optical signal;
· A multilayer electronic printed circuit on which the reception and transmission systems are mounted, with a connection system to facilitate fitting to a standard television socket;
· An integrated connection system in the socket for connecting one or more optical fibres required for the transmission of analogue and/or digital optical signals, with an adapter for optical connectors of one or more optical fibres;
· A system for fixing the optical socket for reception and transmission to the standard supports of optical fibre reels.

2. Socket according to Claim 1, **characterized by** a laser of the DFB (distributed feedback) type used as the optical source for transmitting the return path signal.

3. Socket according to Claim 1, **characterized by** a laser of the Fabry Perot type used as the optical source for transmitting the return path signal.

4. Socket according to Claim 1, **characterized by** a laser of the VCSEL type used as the optical source for transmitting the return path signal.

5. Socket according to Claim 1, **characterized by** an optical adapter for connecting optical fibre cables from the subscriber's home.

6. Socket according to Claim 1, **characterized by** an inset optical connector, for connecting optical fibre cables from the subscriber's home.

7. Socket according to Claim 1, **characterized by** one or more optical couplers which connect the optical fibre inputs and outputs.

8. Socket according to Claim 1, **characterized by** optical inputs and outputs of the multi-mode optical fibre type.

9. Socket according to Claim 1, **characterized by** optical inputs and outputs of the single-mode optical fibre type.

10. Socket according to Claim 1, **characterized by** optical inputs and outputs in the form of an optical fibre ribbon.
